# EUROPEAN PATENT SPECIFICATION

(11) **EP 0 263 617 B1**
(45) Date of publication and mention of the grant of the patent: **28.04.1993**
(21) Application number: 87308413.1
(22) Date of filing: 23.09.1987
(51) Int. Cl.: H04N 5/14

(54) **Video signal enhancement by adaptive digital signal processing**
Verbesserung eines Videosignals durch adaptive digitale Signalverarbeitung
Amélioration du signal vidéo par traitement adaptatif du signal numérique

(30) Priority: 30.09.1986 US 913701
(43) Date of publication of application: 13.04.1988
(73) Proprietor: AT&T Corp., New York, NY 10013-2412 (US)
(72) Inventor: Rzeszewski, Theodore Stanley, Lombard Illinois 60148 (US)
(74) Representative: Buckley, Christopher Simon Thirsk

(56) References cited:
- IEEE TRANSACTIONS ON CONSUMER ELECTRONICS, vol. CE-32, no. 3, August 1986, pages 151-154, IEEE, New York, US; F. FONSALAS et al.: "An edge enhancement algorithm using a polynomial transformation"
- WISSENSCHAFTLICHE BERICHTE A.E.G., vol. 45, no. 1/2, 1972, pages 36-47; P. ZAMPERONI: "Die Verbesserung der Bildqualität bei tiefpassbegrenzten Fernsehsignalen"
- IEEE TRANSACTIONS ON CONSUMER ELECTRONICS, vol. CE-33, no. 2, May 1987, pages 71-75, IEEE, New York, NY, US; T.S. RZESZEWSKI: "Picture crispening by adaptive digital signal processing"

## Description

The present invention relates to digital video processing, and more particularly to digital arrangements for sharpening the edges, or crispening, of video pictures through digital signal processing within a video receiver.

A common technique for giving an apparent improvement in resolution in an analog television, TV, receiver is to have an adjustment called a peaking or sharpness control. Even in those TV receivers that lack any peaking control there is normally some amount of fixed peaking incorporated into the design to improve the transient response. Peaking of the baseband signal at the receiver is an attempt to compensate for finite transmission bandwidth that produces poor rise and fall times. The objective of peaking is to produce a crisper-looking picture that appears to have more resolution also referred to as detail. The use of peaking to improve the apparent resolution has also been utilized in digital TV receivers. For example, digital TV receivers are disclosed in an article entitled "Feature IC's For Digivision TV Sets", IEEE Transactions on Consumer Electronics, Vol. CE-29, pp. 237-241, August 1983, or in an article entitled "What is the Impact of Digital TV?", IEEE, Transactions on Consumer Electronics, Vol. CE-28, No. 3, August 1982.

Whereas, the use of peaking for improving the apparent resolution of a TV picture has been utilized for a number of years, this technique does suffer from the following problems: ringing of the time domain response on sharp edges, emphasis of the high frequencies compared to the low frequencies, increased amount of noise in the picture, and excessive preshoot or overshoot, or both, at a transient edge. In addition, the implementation of peaking in digital receivers has consumed a disproportionate amount of the digital processing capabilities of a digital receiver.

The foregoing problems are solved and a departure in the art is achieved by a structural embodiment and a method whereby digital logical decisions based on predefined patterns are utilized to insert additional digital samples into received digital samples representing the TV signal to enhance the resolution of the latter signal but avoid introducing the previous mentioned problems associated with peaking.

Advantageously, the received digital signal samples are grouped into a plurality of groups of samples, and a logic circuit determines predefined patterns of digital samples within each of these groups and inserts additional digital samples within each group based on the determined predefined pattern for each group.

Specifically, the logic circuit groups the digital samples into sets of digital samples. The logic circuit then calculates the slope between digital samples of each of the sets and on the basis of these calculated slopes performs a logical comparison between the set and a plurality of predefined patterns which are characterized in terms of slopes.

The logic circuit groups the incoming samples into sets each containing three samples. The logic circuit then generates a first type of signal if the slope between a pair of samples is not constant and a second type of signal if the slope between a pair of samples is positive or negative. The logic circuit utilizes an Exclusive OR gate to perform a comparison. The Exclusive OR gate is responsive to receipt of a first and a second of type signal to generate a third signal and is responsive to both inputs being a first type signal or a second type signal for generating a fourth signal. The logical signal utilizes a multiplexer which is responsive to the third signal for inserting a digital sample which is equal to one of the digital samples in the set which illustratively is the middle sample of the set and is further responsive to the fourth signal for inserting a digital sample which is equal to the average of two of the samples of the set.
FIG. 1 illustrates a first embodiment of a logic circuit for determining which of the patterns illustrated in FIG. 2 is to be utilized for inserting a sample into a received digital video signal;
FIG. 2 illustrates in graphic form a set of predefined patterns in accordance with this invention;
FIG. 3 illustrates in graphical form a digital video signal whose resolution has been enhanced by the logic circuit of FIG. 1;
FIG. 4 illustrates the details of block 128 of FIG. 1;
Fig. 5 illustrates a second embodiment of a logic circuit for determining which of the patterns illustrated in FIG. 6 are to be utilized for inserting samples into a received digital video signal; and
Fig. 6 illustrates in graphic form a set of predefined patterns in accordance with this invention.

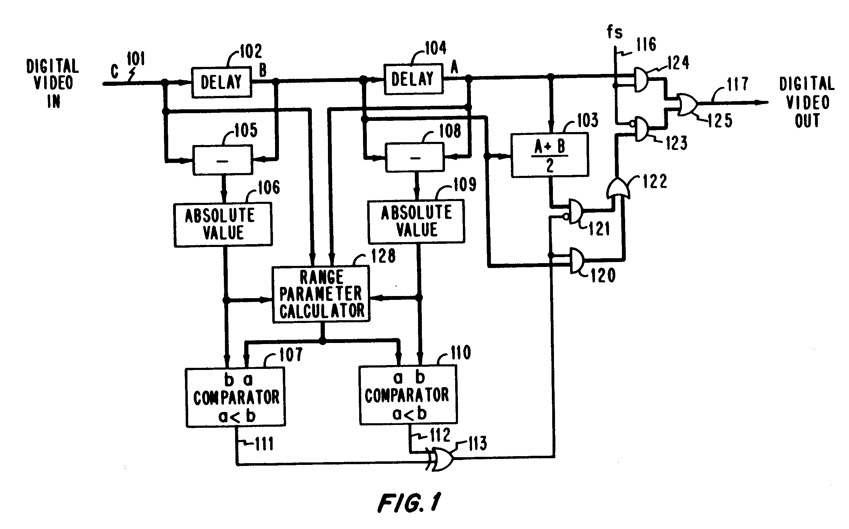

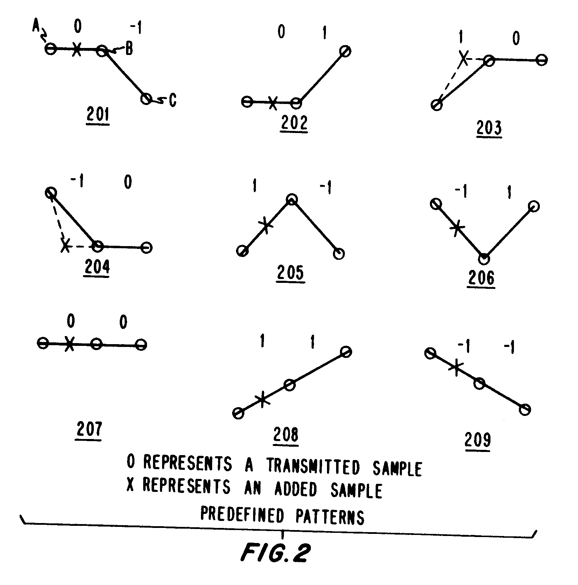

FIG. 1 illustrates a logic circuit for crispening or improving the apparent resolution of a digital video signal. The circuit would be utilized in the digital TV receivers such as the one described in the article. The circuit would replace the peaking circuit of FIG. 2 as disclosed in that article entitled "Feature IC's for Digivision TV Sets". The circuit of FIG. 1 inserts an additional sample between each of the received digitized samples on input bus 101 thereby doubling the sample rate. The value of the sample inserted is determined by comparing three samples received from input bus 101 with the patterns illustrated in FIG. 2. The three sample points are compared against the patterns illustrated in FIG. 2 by the circuit of FIG. 1 are designated C, B, and A, with B being the present sample, C being the next sample, and A being the previous sample. Sample A is first placed on output bus 117, followed by the inserted sample.

Illustrated in FIG. 2 are the predefined patterns that are used by the circuit of FIG. 1. The numerical designations given on FIG. 2 indicate whether the slope of the signal is constant (0) or negative (-1) or positive (1). For the slope to be considered constant, the difference between the two samples must be less than a value K, which advantageously may have the value of 25 percent of the maximum range between any combination of the samples A, B, or C if this maximum range is greater than advantageously one-sixteenth of the total dynamic range. For example, pattern 201 of FIG. 2 has a slope of "0" between samples A and B indicating that the difference between samples A and B is less than the value K. By the same token, the slope between sample B and sample C is designated as a "-1" which means that the absolute value of C subtracted from B is greater than the value K. In FIG. 2, a sample designated by a circle means that it is a sample received via bus 101, and a sample designated by an X is an inserted sample.

Consider now the operation of the circuit in FIG. 1 in greater detail. As digital samples are received on bus 101, they are processed through delay blocks 102 and 104. The sample being received on bus 101 is the next sample and is designated as C, the output of delay block 102 is the present sample and is designated as B, and the output of delay block 104 is the previous sample and is designated as A. The circuit of FIG. 1 is responsive to a clock signal, fs, received via conductor 116 being a logical "0" (low logic level) to either place the present sample B on output bus 117 or to determine a new sample and place it on output bus 117. The clock signal is received from the remainder of the digital receiver. When fs is a "1", (a high logic level) sample A is gated onto the latter bus. When the previous sample, A, is to be placed on output bus 117, the fs signal received via conductor 116 being "1" enables AND gates 124 which transfers the A sample via OR gates 125 to bus 117. When the inserted sample is to be placed on output bus 117, a "0" is received via conductor 116 that selects the output of OR gates 122. The latter output is the sample to be inserted, and the insertion is performed by enabling AND gates 123 which place the inserted sample onto bus 117 via OR gates 125.

Consider now how the inserted sample is determined. Blocks 105 through 107 determine whether the slope between samples C and B is constant or either negative or positive; similarly, blocks 108 through 110 make the same determination for the slope between samples B and A. If the slope between samples C and B is constant, the output of block 107 is "0"; whereas, if the slope is negative or positive, the output of block 107 is a "1". Blocks 108 through 110 function in the same manner with respect to samples B and A. For patterns 201 through 204, the output of Exclusive OR gate 113 is a "1". For example, with respect to pattern 201 the output of block 107 is a "1" whereas the output of block 110 is a "0". Exclusive OR gate 113 is responsive to the output from blocks 107 and 110 being "1" and "0", respectively, to transmit a "1" to gates 120 and 121 which results in gate 120 transferring the B sample to OR gate 122. For patterns 205 through 209 of FIG. 2, the output of Exclusive OR gate 113 is "0" since Exclusive OR gate 113 is either receiving a "0" from blocks 107 and 110 or "1" from blocks 107 and 110 for the latter patterns. AND gates 121 are responsive to the output of gate 113 being a "0" to transfer the output of block 103 to OR gates 122. During the logical "0" part of the fs signal, the inserted sample is placed on output bus 117, and the output of Exclusive OR gate 113 controls whether the output of block 102 or block 103 is transferred to OR gates 125 via gates 120 through 123. If the output of Exclusive OR gate 113 is a "1" gates 120 through 123 select the B sample onto output bus 117. However, if the output of Exclusive OR gate 113 is a "0" then the average between samples A and B is placed on bus 117 by gates 121 through 123 selecting the output of block 103.

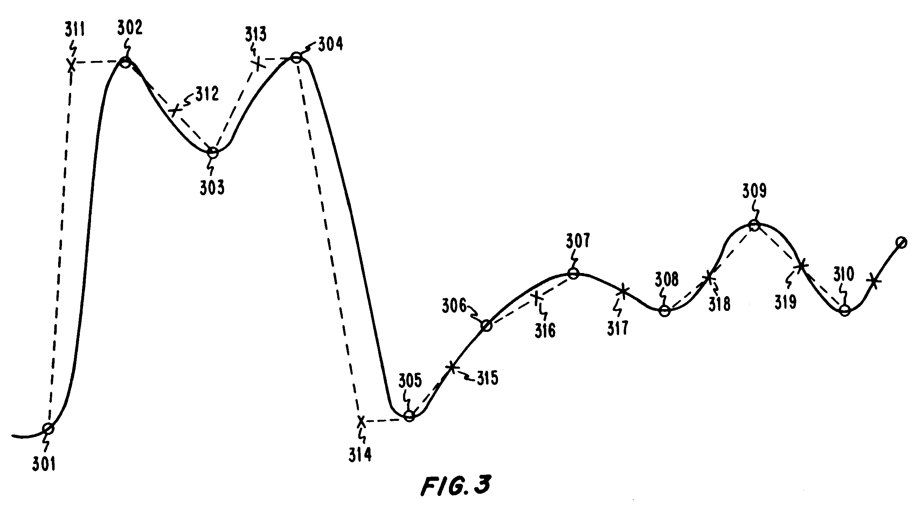

FIG. 3 illustrates the response of the circuit of FIG. 1 to an input signal whose analog form is illustrated in FIG. 3 as a solid line. The samples which are represented by circles are the samples received via bus 101, and the samples represented by Xs are the inserted samples which, along with the received samples, are transmitted via output bus 117. For example, when sample 302 is the present sample, sample B, the circuit of FIG. 1 recognizes this as pattern 203 since the difference between sample 302 and sample 303 is less than the value K calculated by range parameter calculator 128. Since the pattern is 203, the inserted sample 311 is equal to the present sample 302. When the sample 303 is the present sample, the circuit recognizes the pattern as pattern 206 resulting in the inserted sample 312 being equal to the average of samples 302 and 303. Pattern 206 is identified rather than pattern 207 since the difference between samples 302 and 303 and the difference between samples 303 and 304 are both greater than the calculated value K. When sample 304 is the present sample, the circuit identifies the pattern as pattern 201 resulting in the inserted sample 313 being equal to the present sample 304. When the present sample is sample 305, the circuit determines that the pattern is pattern 204 resulting in the inserted sample of 314 being equal to the present sample 305. Inserted points 315 through 319 result from the circuit determining that the patterns generating these inserting points are patterns 205, 206, or 208 since the differences between any pair of received points, such as points 305 and 306, is greater than the calculated value K for received points 305 through 310.

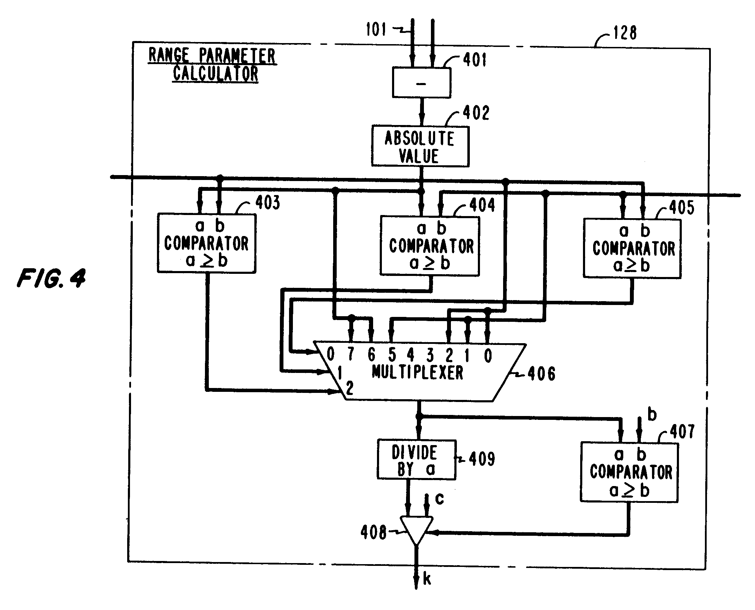

FIG. 4 illustrates in greater detail block 128 of FIG. 1. Block 128 determines the range occupied by samples A, B, and C; and if the largest range is greater than a constant b which advantageously is 1/16 of the total dynamic range, the largest range is divided by a constant a, which advantageously may be 25 percent of the total dynamic range, and the result of the division operation is selected as the value K. If the maximum range between the samples is less than the constant b, then K is set equal to a constant c which advantageously may be 1/64 of the dynamic range.

Blocks 401 and 402 calculate the absolute value of the difference between samples A and C by a calculation that is similar to the calculation that is performed by blocks 106 and 107 of FIG. 1. In conjunction with multiplexer 406, comparators 403, 404, and 405 determine which range is the largest. Multiplexer 406 is responsive to the outputs of the comparators 403 through 405 for selecting the largest range. Once the range has been selected and placed on the output of multiplexer 406, comparator 407 compares this range with the constant b. If the selected range is greater than the constant b, then multiplexer 408 selects the output of block 409 which is the selected range divided by the constant a. If the selected range is not greater than the constant b, then comparator 407 controls multiplexer 408 to select the constant c as the value of K.

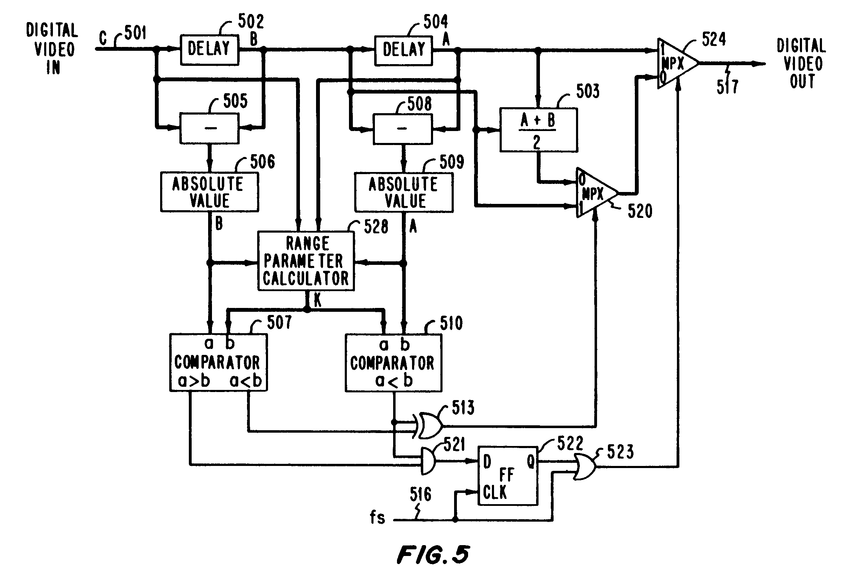

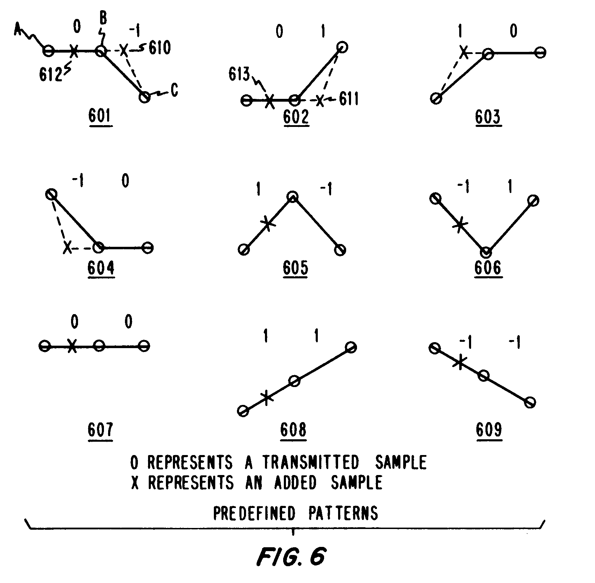

FIG. 5 illustrates another logic circuit for crispening or improving the apparent resolution of a digital video signal. The circuit of FIG. 5 inserts one or more additional samples between received digitized samples from input bus 501, which are grouped into sets of three samples, by comparing each set of samples with the patterns illustrated in FIG. 6. Patterns 603 through 609 in FIG. 6 are identical to patterns 203 through 209 of FIG. 2 with respect to the received digital samples and the inserted digital samples. Patterns 601 and 602 are the same as patterns 201 and 203 with respect to the received digital samples but differ in that the circuit of FIG. 5 inserts two samples rather than one sample per set of samples as is done by the circuit of FIG. 1. Sample 610 and sample 611 are inserted in addition to sample 612 and 613 into patterns 601 and 602, respectively. The insertion of samples 610 and 611 further crispens the received digital samples for patterns 601 and 602.

Elements 502 through 513 are identical to elements 102 through 113 of FIG. 1. Multiplexer 520 is equivalent to elements 121 through 122 of FIG. 1, and multiplexer 524 is equivalent to elements 123 through 125 of FIG. 1. Range parameter calculator 528 is similar in operation to element 128 of FIG. 1. The occurrence of patterns 601 and 602 in the input video signal is detected by AND gate 521 in conjunction with comparators 507 and 510. When one of these patterns is detected, flipflop 522 is set and overrides the normal operation of the circuit of FIG. 5 during the next clock time.

Consider now the operation of the circuit of FIG. 5 with respect to pattern 601. Inserted sample 612 is identical to sample B. Sample 612 is inserted when fs, the clock signal, is a "0", by multiplexer 524 selecting the output of multiplexer 520 which in turn selects sample B. Multiplexer 520 is responsive to the output of gate 513 being a "1" to select sample B. During the next clock cycle, old sample B becomes new sample A, old sample C becomes new sample B, and the next input sample from bus 501 becomes new sample C. Since flipflop 522 is set, the circuit of FIG. 5 is effectively inhibited from examining this new set of samples in the normal manner, Rather flipflop 522 controls multiplexer 524 to select the output of delay 504 which is equivalent to the previous sample B and to output this sample twice onto output bus 517 during this next clock cycle. This results in the sample B of pattern 601 being transmitted three times on bus 517. Pattern 602 is handled in a similar manner.

A digital signal processor could be programmed to implement the functions of FIGS. 1 and 5, and such programming would be routine. Further the principles used in FIGS. 1 and 5 could be used to enhance a video signal along the vertical scan direction as well as the horizontal scan direction.

## Claims

1. An arrangement for enhancing a signal defined by a plurality of digitized samples:
CHARACTERIZED BY
a delay circuit (502, 504) for grouping said plurality of samples into a plurality of sets of samples;
a determinator (505, 506, 507, 508 509, 510, 513, 521, 522, 523, 528) responsive to each of said sets for determining a correspondence between said each set and one of a plurality of predefined patterns of samples; and
a selector (503, 520, 524) responsive to the determined one of said plurality of predefined patterns of samples for each of said sets for inserting samples into said each set.

2. The arrangement of claim 1 wherein said determinator comprises a calculator (505-510) for calculating slopes between samples of each of said sets; and
logic (513, 521, 522, 523) for logically comparing the calculated slopes of each of said sets with said plurality of predefined patterns to determine the correspondence of each set to said plurality of predefined patterns.

3. The arrangement of claim 2 wherein each of said sets comprises three samples and said calculator comprises a first comparator (507) for generating a first signal upon a calculated slope between an adjacent two of said samples being constant for each set and a second comparator (510) for generating a second signal upon said calculated slope being other than constant for each set;
said logic unit comprises a first logic circuit (513) responsive to generation of both a first and a second signal for each set for generating a third signal for each set and further responsive to generation of only first signals and generation of only second signals for generating a fourth signal for each set;
a second logic circuit (521) for sequentially detecting both said first and second signals for each of said sets to generate a fifth signal;
said selector responsive to said third signal for each of said sets for including an inserted sample equal to one of said samples of each set;
said selector further responsive to said fourth signal for each of said sets for inserting a sample equal to the average of two of said samples of each set; and
said selector further responsive to said fifth signal for each of said sets for including two samples equal to one of said samples of said set.

4. The arrangement of claim 3 wherein each of said sets of samples has two slopes associated with it and each slope is between two of the samples of each set and said determinator further comprises range parameter calculator (528) responsive to the samples of each set for generating a value defining range information for each set.

5. The arrangement of claim 4 wherein said range parameter calculator comprises means (401, 402) for determining the differences between samples of each of said sets;
an arithmetic unit (402-406) for locating the maximum difference between samples for each set; and
a divider (409) for dividing the located maximum difference by a predefined value for each set to generate said value.

6. A method for enhancing a signal defined by a plurality of digitized samples:
CHARACTERIZED BY
grouping (502, 504) said plurality of samples into sets of samples;
determining (505, 506, 507, 508, 510, 513, 521, 522, 523, 528) a correspondence between one of said sets and one of a plurality of predefined patterns of samples in response to said one of said sets; and
inserting (503, 520, 524) samples into said one of said sets in response to the determined one of said plurality of predefined patterns of samples.

7. The method of claim 6 wherein said step of determining comprises the steps of calculating (505-510) slopes between the samples of said one of said sets; and
logically comparing (513, 521, 522, 523) the calculated slopes with said plurality of predefined patterns to determine the correspondence of said one of said sets to said plurality of predefined patterns.

8. The method of claim 7 wherein each of said sets comprises three samples and said calculating step comprises the steps of generating (507) a first signal upon said slope of an adjacent two of said samples being constant and generating (510) a second signal upon said calculated slope being other than constant;
said comparing step comprises the steps of generating (513) a third signal in response to a first and a second signal; and
generating a fourth signal in response to generation of only first signals and to generation of only second signals;
sequentially detecting (521) said first and second signals for said one of said sets to generate a fifth signal;
said inserting step comprises the steps of producing an inserted sample equal to one of said samples of said one of said sets in response to said third signal;
producing a sample equal to the average of two of said samples of said one of said sets in response to said fourth signal; and
producing two samples equal to one of said samples of said one of said sets in response to said fifth signal.

9. The method of claim 8 wherein said one of said sets of samples has two slopes associated with it and each slope being for an adjacent two of said samples of said one of said sets and said step of comparing comprises the steps of generating a value defining range information for said one of said sets in response to said samples; and
testing each slope with the generated range value associated to determine whether each slope is constant.

10. The method of claim 9 wherein said step of generating comprises the steps of calculating the differences between each of said samples;
locating the maximum difference between said samples; and
dividing said located maximum difference by a predefined value to generate said range value.

## Patentansprüche

1. Anordnung zur Verbesserung eines Signals, das durch eine Vielzahl von digitalisierten Abtastwerten definiert wird, gekennzeichnet durch
eine Verzögerungsschaltung (502, 504), die die Vielzahl von Abtastwerten in eine Vielzahl von Sätzen von Abtastwerten gruppiert,
eine Bestimmungseinrichtung (505, 506, 507, 508, 509, 510, 513, 521, 522, 523, 528), die unter Ansprechen auf jeden Satz von Abtastwerten eine Korrespondenz zwischen jedem Satz und einem von einer Vielzahl von vordefinierten Mustern von Abtastwerten bestimmt, und
eine Wähleinrichtung (503, 520, 524), die unter Ansprechen auf das bestimmte Muster der Vielzahl von vordefinierten Mustern von Abtastwerten für jeden der Sätze Abtastwerte in jeden Satz einfügt.

2. Anordnung nach Anspruch 1,
bei der die Bestimmungseinrichtung einen Rechner (505-510) zur Berechnung von Steigungen zwischen Abtastwerten jedes Satzes und
eine Logikeinheit (513, 521, 522, 523) zum logischen Vergleichen der berechneten Steigungen jedes der Sätze mit der Vielzahl von vordefinierten Mustern aufweist, um die Korrespondenz jedes Satzes mit der Vielzahl von vordefinierten Mustern zu bestimmen.

3. Anordnung nach Anspruch 2,
bei der jeder Satz drei Abtastwerte umfaßt und der Rechner einen ersten Komparator (507) ein erstes Signal für eine berechnete Steigung zwischen zwei benachbarten Abtastwerten erzeugt, das für jeden Satz konstant ist, und einen zweiten Komparator (510) zur Erzeugung eines zweiten Signals für die berechnete Steigung umfaßt, das nicht konstant für jeden Satz ist,
bei der die Logikeinheit eine erste Logikschaltung (513) umfaßt, die unter Ansprechen auf die Erzeugung eines ersten und eines zweiten Signals für jeden Satz ein drittes Signal für jeden Satz erzeugt, und ferner unter Ansprechen auf die Erzeugung nur erster Signale und die Erzeugung nur zweiter Signale ein viertes Signal für jeden Satz erzeugt, ferner eine zweite Logikschaltung (521) zur sequentiellen Feststellung sowohl der ersten als auch der zweiten Signale für jeden Satz für die Erzeugung eines fünften Signals aufweist,
bei der die Wähleinrichtung unter Ansprechen auf das dritte Signal für jeden Satz einen eingefügten Abtastwert gleich einem der Abtastwerte jedes Satzes eingibt,
bei der die Wähleinrichtung ferner unter Ansprechen auf das vierte Signal für jeden Satz einen Abtastwert gleich dem Mittelwert der beiden Abtastwerte jedes Satzes einfügt, und bei der die Wähleinrichtung ferner auf das fünfte Signal für jeden Satz anspricht und zwei Abtastwerte gleich einem der Abtastwerte jedes Satzes einfügt.

4. Anordnung nach Anspruch 3,
bei der jedem Satz von Abtastwerten zwei Steigungen zugeordnet sind und jede Steigung zwischen zwei Abtastwerten jedes Satzes liegt, und
bei der die Bestimmungseinrichtung ferner einen Bereichsparameterrechner (528) aufweist, der unter Ansprechen auf die Abtastwerte jedes Satzes einen Wert erzeugt, der eine Bereichsinformation für jeden Satz definiert.

5. Anordnung nach Anspruch 4,
bei der der Bereichsparameterrechner eine Einrichtung (401, 402) zur Bestimmung der Differenz zwischen Abtastwerten jedes Satzes aufweist,
ferner eine Arithmetikeinheit (402-406) zur Feststellung der maximalen Differenz zwischen Abtastwerten für jeden Satz und einen Teiler (409) zum Teilen der festgestellten Maximaldifferenz durch einen vordefinierten Wert für jeden Satz, um den Wert zu erzeugen.

6. Verfahren zur Verbesserung eines Signals, das durch eine Vielzahl von digitalisierten Abtastwerten definiert wird, gekennzeichnet durch
Gruppieren (502, 504) der Vielzahl von Abtastwerten in Sätze von Abtastwerten,
Bestimmen (505, 506, 507, 508, 510, 513, 521, 522, 523, 528) einer Korrespondenz zwischen einem der Sätze und einem von einer Vielzahl von vordefinierten Mustern von Abtastwerten unter Ansprechen auf den einen Satz und
Einfügen (503, 520, 524) von Abtastwerten in den einen Satz unter Ansprechen auf das bestimmte Muster der Vielzahl von vordefinierten Mustern von Abtastwerten.

7. Verfahren nach Anspruch 6,
bei dem der Bestimmungsschritt die Schritte umfaßt:
Berechnen (505-510) von Steigungen zwischen den Abtastwerten des einen Satzes und
logisches Vergleichen (513, 521, 522, 523) der berechneten Steigungen mit der Vielzahl von vordefinierten Mustern, um die Korrespondenz des einen Satzes mit der Vielzahl von vordefinierten Mustern zu bestimmen.

8. Verfahren nach Anspruch 7,
bei dem jeder der Sätze drei Abtastwerte umfaßt und der Berechnungsschritt die Schritte aufweist:
Erzeugen (507) eines ersten Signals, wenn die Steigung zwischen zwei benachbarten Abtastwerten konstant ist,
Erzeugen (510) eines zweiten Signals, wenn die berechnete Steigung nicht konstant ist,
bei dem der Vergleichsschritt die Schritte aufweist:
Erzeugen (513) eines dritten Signals unter Ansprechen auf ein erstes und ein zweites Signal,
Erzeugen eines vierten Signals unter Ansprechen auf die Erzeugung nur erster und nur zweiter Signale, und sequentielles Feststellen (521) des ersten und des zweiten Signals für den einen Satz zur Erzeugung eines fünften Signals, und
bei dem der Einfügungsschritt die Schritte aufweist:
Erzeugen eines eingefügten Abtastwertes gleich einem der Abtastwerte des einen Satzes unter Ansprechen auf das dritte Signal,
Erzeugen eines Abtastwertes gleich dem Mittelwert von zwei Abtastwerten des einen Satzes unter Ansprechen auf das vierte Signal und
Erzeugen von zwei Abtastwerten gleich einem der Abtastwerte des einen Satzes unter Ansprechen auf das fünfte Signal.

9. Verfahren nach Anspruch 8,
bei dem einem der Sätze von Abtastwerten zwei Steigungen zugeordnet sind und jede Steigung für zwei benachbarte Abtastwerte des einen Satzes gilt und bei dem der Vergleichsschritt die Schritte aufweist:
Erzeugen eines Wertes, der eine Bereichsinformation für jeden der Sätze unter Ansprechen auf die Abtastwerte definiert, und
Prüfen jeder Steigung mit dem erzeugten und zugeordneten Bereichswert, um festzustellen, ob jede Steigung konstant ist.

10. Verfahren nach Anspruch 9,
bei dem der Erzeugungsschritt die Schritte aufweist:
Berechnen der Differenz zwischen den Abtastwerten, Feststellen der maximalen Differenz zwischen den Abtastwerten und
Teilen der festgestellten Maximaldifferenz durch einen vorbestimmten Wert, um den Bereichswert zu erzeugen.

## Revendications

1. Une structure pour améliorer un signal défini par un ensemble d'échantillons numérisés,
CARACTERISEE PAR
un circuit de retard (502, 504) destiné à grouper l'ensemble d'échantillons en un ensemble de jeux d'échantillons;
un circuit de détermination (505, 506, 507, 508, 509, 510, 513, 521, 522, 523, 528) réagissant à chacun des jeux précités en déterminant une correspondance entre chaque jeu et une configuration parmi un ensemble de configurations d'échantillons prédéfinies; et
un sélecteur (503, 520, 524) qui fonctionne sous la dépendance de la configuration déterminée parmi l'ensemble de configurations d'échantillons prédéfinies pour chacun des jeux d'échantillons, de façon à insérer des échantillons dans chaque jeu.

2. La structure de la revendication 1, dans laquelle le circuit de détermination comprend un calculateur (505-510) qui est destiné à calculer des pentes entre des échantillons de chacun des jeux; et
une unité logique (513, 521, 522, 523) qui est destinée à comparer logiquement les pentes calculées de chacun des jeux avec un ensemble de configurations prédéfinies, pour déterminer la correspondance de chaque jeu avec l'ensemble de configurations prédéfinies.

3. La structure de la revendication 2, dans laquelle chacun-des jeux comprend trois échantillons et le calculateur comprend un premier comparateur (507) qui est destiné à produire un premier signal lorsqu'une pente calculée entre deux échantillons adjacents est constante pour chaque jeu, et un second comparateur (510) qui est destiné à produire un second signal lorsque la pente calculée est autre que constante pour chaque jeu;
l'unité logique comprend un premier circuit logique (513) qui réagit à la génération conjointe d'un premier signal et d'un second signal pour chaque jeu en produisant un troisième signal pour chaque jeu, et qui réagit en outre à la génération de premiers signaux seulement et à la génération de seconds signaux seulement, en produisant un quatrième signal pour chaque jeu;
un second circuit logique (521) qui détecte séquentiellement les premier et second signaux pour chacun des jeux, de façon à produire un cinquième signal;
le sélecteur réagit au troisième signal pour chacun des jeux en incluant un échantillon inséré égal à l'un des échantillons de chaque jeu;
le sélecteur réagit en outre au quatrième signal pour chacun des jeux en insérant un échantillon égal à la moyenne de deux des échantillons de chaque jeu; et
le sélecteur réagit en outre au cinquième signal pour chacun des jeux en incluant deux échantillons qui sont égaux à l'un des échantillons du jeu.

4. La structure de la revendication 3, dans laquelle deux pentes sont associées à chacun des jeux d'échantillons, et chaque pente est établie entre deux des échantillons de chaque jeu, et le circuit de détermination comprend en outre un calculateur de paramètre de distance (528) qui réagit aux échantillons de chaque jeu en produisant une valeur qui définit une information de distance pour chaque jeu.

5. La structure de la revendication 4, dans laquelle le calculateur de paramètre de distance comprend des moyens (401, 402) qui sont destinés à déterminer les différences entre des échantillons de chacun des jeux;
une unité arithmétique (402-406) qui est destinée à localiser la différence maximale entre des échantillons pour chaque jeu; et
un diviseur (409) qui est destiné à diviser par une valeur prédéfinie la différence maximale localisée, pour chaque jeu, pour produire la valeur précitée.

6. Un procédé pour améliorer un signal défini par un ensemble d'échantillons numérisés,
CARACTERISE EN CE QUE
on groupe (502, 504) l'ensemble d'échantillons en jeux d'échantillons;
on détermine (505, 506, 507, 508, 510, 513, 521, 522, 523, 528) une correspondance entre l'un des jeux et une configuration parmi un ensemble de configurations d'échantillons prédéfinies, sous la dépendance du jeu précité; et
on insère (503, 520, 524) des échantillons dans le jeu précité, sous la dépendance de la configuration déterminée parmi l'ensemble de configurations d'échantillons prédéfinies.

7. Le procédé de la revendication 6, dans lequel l'étape de détermination comprend les étapes qui consistent à calculer (505-510) des pentes entre les échantillons du jeu précité; et
à comparer logiquement (513, 521, 522, 523) les pentes calculées avec l'ensemble de configurations prédéfinies, pour déterminer la correspondance entre le jeu précité et l'ensemble de configurations prédéfinies.

8. Le procédé de la revendication 7, dans lequel chacun des jeux comprend trois échantillons et l'étape de calcul comprend les étapes qui consistent à produire (507) un premier signal lorsque la pente de deux échantillons adjacents est constante, et à produire (510) un second signal lorsque la pente calculée est autre que constante;
l'étape de comparaison comprend les étapes qui consistent à produire (513) un troisième signal sous l'effet d'un premier signal et d'un second signal; et
à produire un quatrième signal sous l'effet de la génération de premiers signaux seulement et de la génération de seconds signaux seulement;
à détecter séquentiellement (521) les premier et second signaux pour le jeu précité, de façon à produire un cinquième signal;
l'étape d'insertion comprend les étapes qui consistent à produire un échantillon inséré égal à l'un des échantillons du jeu précité, sous l'effet du troisième signal;
à produire un échantillon égal à la moyenne de deux des échantillons du jeu précité, sous l'effet du quatrième signal; et
à produire deux échantillons égaux à l'un des échantillons du jeu précité, sous l'effet du cinquième signal.

9. Le procédé de la revendication 8, dans lequel deux pentes sont associées au jeu précité parmi les jeux d'échantillons, et chaque pente concerne deux échantillons adjacents du jeu précité, et l'étape de comparaison comprend les étapes qui consistent à générer une valeur définissant une information de distance pour le jeu précité, sous la dépendance des échantillons précités; et
à tester chaque pente par comparaison avec la valeur de distance générée associée, afin de déterminer si chaque pente est constante.

10. Le procédé de la revendication 9, dans lequel l'étape de génération comprend les étapes qui consistent à calculer les différences entre chacun des échantillons;
à localiser la différence maximale entre les échantillons; et
à diviser par une valeur prédéfinie la différence maximale localisée, afin de produire la valeur de distance.
